# EUROPEAN PATENT APPLICATION

(11) **EP 4 723 653 A1**
(43) Date of publication of application: **08.04.2026**
(21) Application number: 24826120.8
(22) Date of filing: 08.05.2024
(51) Int. Cl.: H04N 21/4402, H04N 21/44, H04N 21/462, H04N 21/81, G06F 3/14, G06V 30/10, G06V 20/40

(54) **DISPLAY DEVICE AND OPERATION METHOD THEREOF**

(30) Priority: 22.06.2023 KR 20230080633
(71) Applicant: Samsung Electronics Co., Ltd., Suwon-si, Gyeonggi-do 16677 (KR)
(72) Inventor: BAE, Sangmin, Suwon-si, Gyeonggi-do 16677 (KR)
(74) Representative: Appleyard Lees IP LLP
(86) International application number: PCT/KR2024/006192
(87) International publication number: WO 2024/262798

(57) **Abstract**

A display device according to an embodiment includes a display, a rotation driving module configured to rotate the display, a memory storing one or more instructions, and at least one processor configured to execute the one or more instructions, wherein the at least one processor executes the one or more instructions to cause the display device to, based on a state of the display not corresponding to attributes of image content to be displayed on the display, determine whether the image content is a specific type of content, based on the image content not being the specific type of content, control the rotation driving module to rotate the display, and control the display to display the image content on a display screen that is rotated, and based on the image content being the specific type of content, not rotate the display, and control the display to display the image content on the display screen that is not rotated.

## Description

### Technical Field

Various embodiments relate to a display device capable of rotating a display and an operation method of the display device.

### Background Art

A display device is a device having a function of displaying images viewable by a user. The user may watch a broadcast through the display device. The display device displays, on a display, a broadcast selected by the user from among broadcast signals transmitted from a broadcasting station. Also, smart televisions (TVs) for providing a variety of content in addition to a broadcasting function are being provided. A smart TV does not passively operate based on a user's selection, but performs a function of providing content desired by the user by using the user's previous viewing history information even without the user's manipulation.

Recently, a rotatable display device has been developed. When a user command for rotation is input, a rotatable display device may rotate a horizontally elongated display to a vertically elongated display or rotate a vertically elongated display to a horizontally elongated display.

The user may rotate the display by directly entering an input for display rotation at a desired time. In this case, there is an inconvenience in that the user should input a user command for display rotation each time.

Alternatively, the display device may control the display to be automatically rotated when a preset condition is satisfied. When the display is automatically rotated, the display may be rotated even when the user does not want it.

### Disclosure of Invention

### Solution to Problem

A display device according to an embodiment may include a display, a rotation driving module configured to rotate the display, a memory storing one or more instructions, and at least one processor configured to execute the one or more instructions.

The at least one processor may execute the one or more instructions to cause the display device to, based on a state of the display not corresponding to attributes of image content to be displayed on the display, determine whether the image content is a specific type of content.

The at least one processor may execute the one or more instructions to cause the display device to, based on the image content not being the specific type of content, control the rotation driving module to rotate the display.

The at least one processor may execute the one or more instructions to cause the display device to control the display to display the image content on a display screen that is rotated.

The at least one processor may execute the one or more instructions to cause the display device to, based on the image content being the specific type of content, not rotate the display, and control the display to display the image content on the display screen that is not rotated.

An operation method of a display device capable of rotating a display according to an embodiment may include, based on a state of the display not corresponding to attributes of image content to be displayed on the display, determining whether the image content is a specific type of content.

The operation method of the display device capable of rotating the display according to an embodiment may include, based on the image content not being the specific type of content, rotating the display.

The operation method of the display device capable of rotating the display according to an embodiment may include, displaying the image content on a display screen that is rotated.

The operation method of the display device capable of rotating the display according to an embodiment may include, based on the image content being the specific type of content, not rotating the display, and displaying the image content on the display screen that is not rotated.

### Brief Description of Drawings

FIG. 1 is a view illustrating a display device, according to an embodiment.
FIG. 2 is a flowchart illustrating an operation in which a display device performs automatic rotation of a display, according to an embodiment.
FIG. 3 is a flowchart specifically illustrating operation S220 of FIG. 2.
FIG. 4 is a view for describing an operation of setting a screen mode of a display device, according to an embodiment.
FIG. 5 is a view for describing an operation in which a display device determines a case where rotation of a display is necessary in an automatic rotation mode, according to an embodiment.
FIG. 6 is a view for describing an operation in which a display device determines whether image content is advertisement content, according to an embodiment.
FIG. 7 is a view illustrating an operation of a display device when image content to be displayed on a display is advertisement content, according to an embodiment.
FIG. 8 is a view illustrating an operation of a display device when image content to be displayed on a display is advertisement content, according to an embodiment.
FIG. 9 is a view illustrating an operation of a display device when image content to be displayed on a display is not advertisement content, according to an embodiment.
FIG. 10 is a view illustrating an operation of a display device when image content to be displayed on a display is not advertisement content, according to an embodiment.
FIG. 11 is a block diagram illustrating a configuration of a display device, according to an embodiment.
FIG. 12 is a block diagram illustrating a configuration of a display device, according to an embodiment.

### Mode for the Invention

The terms used herein will be briefly described, and the present disclosure will be described in detail.

The terms used herein are general terms currently widely used in the art in consideration of functions in the present disclosure, but the terms may vary according to the intention of one of ordinary skill in the art, precedents, or new technology in the art. Also, some terms may be arbitrarily selected by the applicant, and in this case, the meaning of the selected terms will be described in detail in the detailed description of the present disclosure. Accordingly, the specific terms used herein should be defined based on the unique meanings thereof and the whole context of the present disclosure.

It will be understood that when a certain part "includes" a certain component, the part does not exclude another component but may further include another component, unless the context clearly dictates otherwise. Also, the term "... unit" or "... module" refers to a unit that performs at least one function or operation, and the unit may be implemented as hardware or software or as a combination of hardware and software.

Embodiments of the present disclosure will now be described more fully with reference to the accompanying drawings for one of ordinary skill in the art to be able to perform the embodiments of the present disclosure without any difficulty. However, the present disclosure may be embodied in many different forms and is not limited to the embodiments set forth herein. For clarity, portions irrelevant to the descriptions of the present disclosure are omitted in the drawings, and like components are denoted by like reference numerals throughout the specification.

In embodiments of the specification, the term "user" refers to a person who controls a system, a function, or an operation, and may include a developer, a manager, or an installation engineer.

Also, in embodiments of the specification, an 'image' or a 'picture' may refer to a still image, a moving image including a plurality of consecutive still images (or frames), or a video.

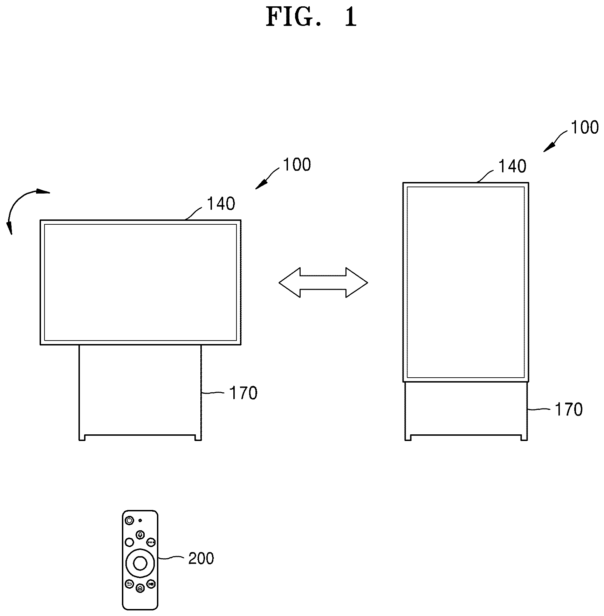

FIG. 1 is a view illustrating a display device, according to an embodiment.

The display device according to an embodiment may include a rotatable display 140. The display device 100 according to an embodiment may be a TV, but this is only an example, and may be any of various devices including a display. For example, the display device 100 may be implemented as any of various electronic devices such as a mobile phone, a tablet PC, a digital camera, a camcorder, a laptop computer, a desktop, an e-book terminal, a digital broadcasting terminal, a personal digital assistant (PDA), a portable multimedia player (PMP), a navigation device, an MP3 player, or a wearable device. However, the present disclosure is not limited thereto.

Also, the display device 100 may be a fixed or movable device, and may be a digital broadcast receiver that may receive digital broadcasts. Also, the display device 100 may be implemented as a curved display device including a screen with a curvature or a flexible display device with an adjustable curvature as well as a flat display device. An output resolution of the display device 100 may include, for example, high definition (HD), full HD, ultra HD, or a resolution higher than ultra HD. However, the present disclosure is not limited thereto.

The display device 100 according to an embodiment may include a stand 170 supporting the display 140, as shown in FIG. 1. The stand 170 according to an embodiment may have any of various shapes and sizes. Also, the stand 170 may be implemented to support the display 140 included in the display device 100 so that the display 140 is rotatable. For example, the stand 170 according to an embodiment may include a rotation driving module. The rotation driving module may be coupled to the display 140 to rotate the display 140. Alternatively, the rotation driving module may be provided separately from the display device 100 and may be coupled to the display 140 and the stand 170. The rotation driving module may be coupled to the display 140 and the stand 170 to rotate the display 140.

Alternatively, the display device 100 may be a wall-mounted type device without including the stand 170, and the rotation driving module may be capable of fixing the display device 100 to a wall. The rotation driving module may be coupled to the wall and the display 140 to rotate the display 140.

The display 140 included in the display device 100 according to an embodiment may rotate around a center point of a screen by operation of the rotation driving module. For example, the display 140 may rotate clockwise or counterclockwise around the center point of the screen.

The display device 100 according to an embodiment may have a plurality of screen modes according to a rotation state of the display. For example, in a first state where the display 140 is rotated so that a long edge of the display 140 is horizontally arranged (the display 140 is horizontally elongated), a screen mode of the display device 100 may be a landscape mode. Alternatively, in a second state where the display 140 is rotated so that the long edge of the display 140 is vertically arranged (the display 140 is vertically elongated), a screen mode of the display device 100 may be a portrait mode. The portrait mode may be a state where the display is rotated by 90 degrees clockwise or counterclockwise from the landscape mode.

For example, in the landscape mode, the display 140 has a screen having a horizontal length greater than a vertical length. Accordingly, this mode may be suitable for displaying image content having an aspect ratio in which a horizontal length is greater than a vertical length. Alternatively, in the portrait mode, the display 140 has a screen having a vertical length greater than a horizontal length. Accordingly, this may be suitable for displaying image content having an aspect ratio in which a vertical length is greater than a horizontal length. However, the present disclosure is not limited thereto.

Although only the landscape mode and the portrait mode are illustrated in FIG. 1, the display device 100 according to an embodiment may have a screen mode in which the long edge of the display 140 is diagonally arranged. However, the present disclosure is not limited thereto.

The display device 100 according to an embodiment may rotate the display 140 based on a user input. For example, the display device 100 may receive a user input for rotating the display 140 from an external control device 200.

Examples of the external control device 200 according to an embodiment may include a remote controller, a portable terminal device such as a smartphone, a keyboard, and a mouse. The external control device 200 may convert a user input that presses a key or a button for rotating the display 140 included in the external control device 200 into a control signal or a control command for rotating the display 140 and may transmit the control signal or the control command to the display device 100. The display device 100 may perform rotation of the display 140 by receiving the control signal or the control command for rotating the display 140 from the external control device 200.

Alternatively, the display device 100 may perform rotation of the display 140 by receiving a voice input or a motion input for rotating the display 140. However, the present disclosure is not limited thereto.

On the other hand, the display device 100 according to an embodiment may operate in an automatic rotation mode in which the display 140 is automatically rotated without a user input.

For example, when the display device 100 operates in the automatic rotation mode, the display device 100 may rotate the display 140 and switch to a screen mode corresponding to screen information of image content to be displayed on the display 140. In this case, the screen information of the image content may include a resolution of the image content, an aspect ratio of the image content, and information about the image content is a horizontal image or a vertical image. However, the present disclosure is not limited thereto.

When a current screen mode is a landscape mode and a screen of the image content to be displayed on the display 140 is a vertically long image (vertical image), the display device 100 may use the rotation driving module to rotate the display 140 by 90 degrees clockwise or counterclockwise and switch to a portrait mode.

Alternatively, when a current screen mode is a portrait mode and a screen of the image content to be displayed on the display 140 is a horizontally long image (horizontal image), the display device 100 may use the rotation driving module to rotate the display 140 by 90 degrees clockwise or counterclockwise and switch to a landscape mode. However, the present disclosure is not limited thereto.

When the display device 100 according to an embodiment performs automatic rotation of the display 140 according to the screen information of the image content to be displayed on the display 140, display rotation may frequently occur whenever temporary image content such as advertisement content is displayed. Accordingly, this may disturb a user's viewing experience and may cause visual fatigue.

The display device 100 according to an embodiment may control the display not to be rotated when screen information of the temporary image content such as advertisement content does not correspond to the current screen mode.

Operations in which the display device 100 according to an embodiment controls rotation of the display will be described in more detail with reference to the following drawings.

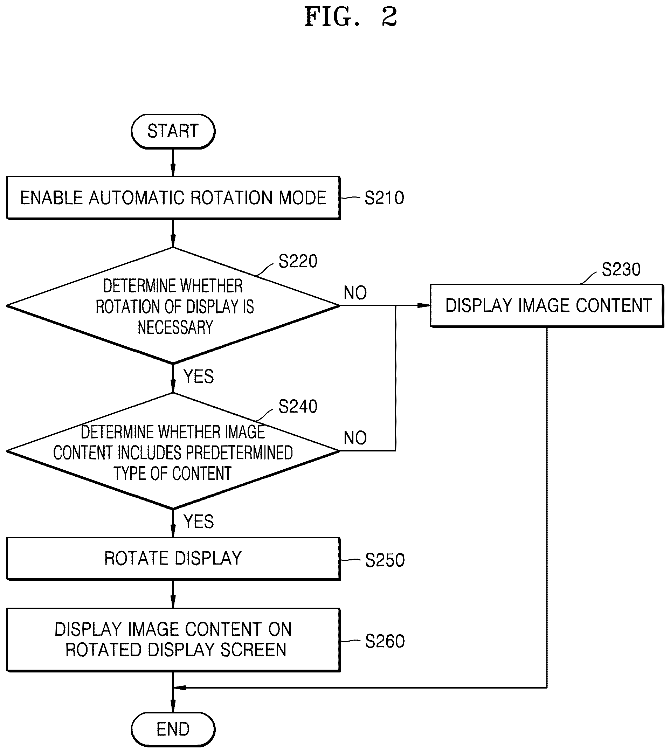

FIG. 2 is a flowchart illustrating an operation in which a display device performs automatic rotation of a display, according to an embodiment.

Referring to FIG. 2, the display device 100 according to an embodiment may be set to an automatic rotation mode (S210).

The display device 100 according to an embodiment may receive a user input that sets the automatic rotation mode and may operate in the automatic rotation mode based on the received user input. Alternatively, the display device 100 may be set to operate in the automatic rotation mode when a present application is executed based on a user input.

The display device 100 according to an embodiment may determine whether rotation of the display is necessary (S220).

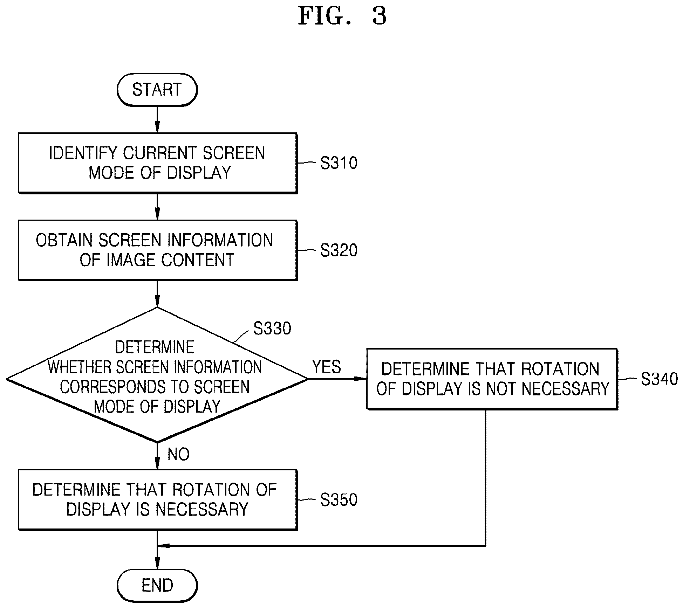

Operation S220 of FIG. 2 will be described in detail with reference to FIG. 3.

FIG. 3 is a flowchart specifically illustrating operation S220 of FIG. 2.

Operation S220 of FIG. 2 may include operations S310 to S350 (S310, S320, S330, S340, and S350) of FIG. 3 as an embodiment.

Referring to FIG. 3, the display device 100 may identify a current state of the display. A state of the display according to an embodiment may include information about a screen mode according to a rotation state of the display. For example, the display device 100 may identify a current screen mode of the display (S310). For example, the display device 100 may identify whether the current screen mode of the display is a landscape mode or a portrait mode.

Also, the display device 100 may obtain attributes of image content to be displayed on the display. The attributes of the image content according to an embodiment may include screen information of the image content. For example, the display device 100 may obtain screen information of the image content to be displayed on the display (S320). For example, the screen information of the image content may include a resolution of the image content, an aspect ratio of the image content, and information about whether the image content is a horizontal image or a vertical image. However, the present disclosure is not limited thereto.

The display device 100 may determine whether the screen information of the image content corresponds to the current screen mode of the display (S330), and when the screen information of the image content does not correspond to the current screen mode of the display, the display device 100 may determine that rotation of the display is necessary (S350).

Alternatively, when the screen information of the image content corresponds to the current screen mode of the display, the display device 100 may determine that rotation of the display is not necessary (S340).

Referring back to FIG. 2, when rotation of the display is not necessary, the display device 100 may maintain the current screen mode without rotating the display. Also, the display device 100 may display the image content on a screen of the display.

On the other hand, when rotation of the display is necessary, the display device 100 may determine whether the image content is a specific type of content (S240).

The specific type of content according to an embodiment may include advertisement content or image content that is temporarily displayed. For example, the specific type of content may include at least one of advertisement content output between different pieces of content, advertisement content output during playback of the same image content, and image content having a playback time less than a preset time. However, the present disclosure is not limited thereto.

The display device 100 according to an embodiment may obtain information about the image content. For example, the information about the image content may include identification information for identifying the image content (e.g., type information of the image content), text information and image information included in the image content, feature information of the image content, and pattern information of the image content. However, the present disclosure is not limited thereto.

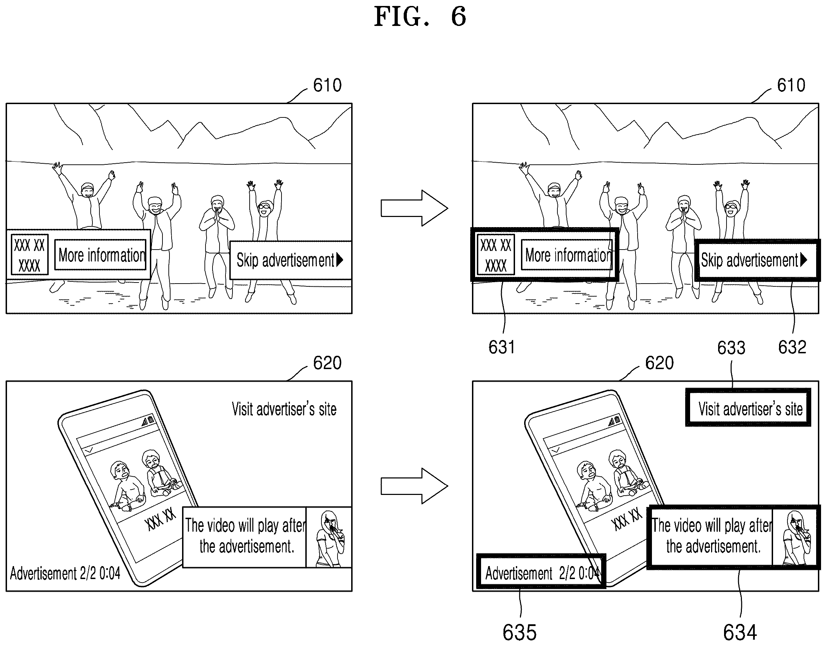

The display device 100 may obtain the information about the image content, by analyzing the image content. For example, the display device 100 may analyze the image content by performing optical character recognition (OCR), automatic content recognition (ACR), object recognition, or pattern recognition. This will be described in detail with reference to FIG. 6.

The display device 100 may determine whether the image content is the specific type of content, based on the information about the image content.

When text such as "advertisement", "advertiser", or "skip advertisement" is recognized in the image content, the display device 100 according to an embodiment may determine that the image content is advertisement content.

Alternatively, when pattern information extracted from the image content matches pattern information of advertisement content provided by a specific application, the display device 100 may determine that the image content is advertisement content. However, the present disclosure is not limited thereto.

Alternatively, when a playback time of the image content is less than a preset time, the display device 100 may determine that the image content is temporarily displayed content.

When the image content is the specific type of content, the display device 100 may maintain the current screen mode without rotating the display, and may display the image content on the display screen (S230).

The display device 100 may adjust a size of the image content based on a current size of the display screen, and may display the image content whose size is adjusted. For example, the display device 100 may adjust the size of the image content to fit the size of the display screen while maintaining an aspect ratio of the image content, and may display the image content whose size is adjusted.

On the other hand, when the image content is not the specific type of content, the display device 100 may rotate the display by using the rotation driving module (S250).

For example, when the current screen mode is a landscape mode and the image content is a vertical image (e.g., an image having an aspect ratio in which a vertical length is greater than a horizontal length), the display device 100 may use a rotation driving module to rotate the display by 90 degrees clockwise or counterclockwise and switch to a portrait mode.

Alternatively, when the current screen mode is a portrait mode and the image content is a horizontal image (e.g., an image having an aspect ratio in which a horizontal length is greater than a vertical length), the display device 100 may use the rotation driving module to rotate the display by 90 degrees clockwise or counterclockwise and switch to a landscape mode. However, the present disclosure is not limited thereto.

The display device 100 may display the image content on the rotated display screen (S260).

For example, the display device 100 may display the image content in a full screen.

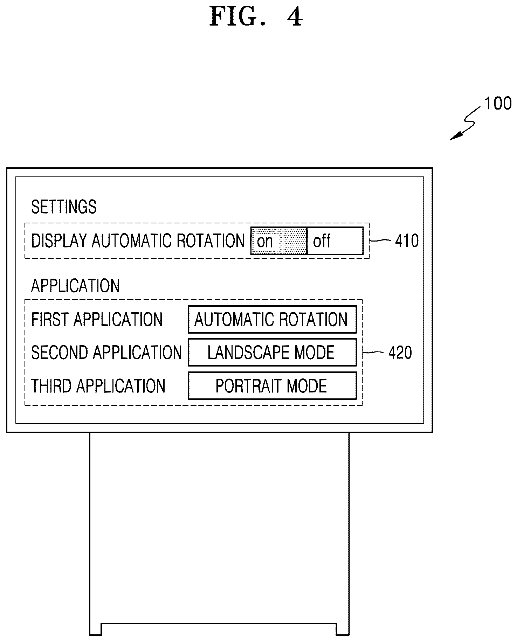

FIG. 4 is a view for describing an operation of setting a screen mode of a display device, according to an embodiment.

Referring to FIG. 4, a display device according to an embodiment may display a setting menu screen on a display, based on a user input. The setting menu screen according to an embodiment may include menus for setting whether to perform automatic rotation of the display. For example, the setting menu screen may include a first menu 410 for turning on/off an automatic rotation function of the display. When the automatic rotation function of the display is set to on, the display device 100 may automatically perform rotation of the display based on a current screen mode of the display and screen information of image content to be displayed on the display.

On the other hand, when the automatic rotation function of the display is set to off, the display device 100 may perform rotation of the display based on reception of a user input that requests rotation of the display.

Also, the setting menu screen according to an embodiment may include a second menu 420 for setting a screen mode of the display for each of a plurality of applications installed in the display device.

For example, the display device 100 may set a display screen mode for a first application to an automatic rotation mode, based on a user input. When the display screen mode for the first application is set to the automatic rotation mode, the display device 100 may automatically perform rotation of the display based on the current screen mode of the display and the screen information of the image content when executing the first application to display the image content.

Also, the display device 100 may set a display screen mode for a second application to a landscape mode, based on a user input. When the display screen mode for the second application is set to the landscape mode, the display device 100 may maintain the display in the landscape mode regardless of the screen information of the image content when executing the second application to display the image content.

Also, the display device 100 may set a display screen mode for a third application to a portrait mode, based on a user input. When the display screen mode for the third application is set to the portrait mode, the display device 100 may maintain the display in the portrait mode regardless of the screen information of the image content when executing the third application to display the image content,.

Also, even when an automatic rotation function of the display is set to on or is set to any one of an automatic rotation mode, a landscape mode, and a portrait mode for an application, the display device 100 according to an embodiment may perform rotation of the display when receiving a user input that requests rotation of the display. However, the present disclosure is not limited thereto.

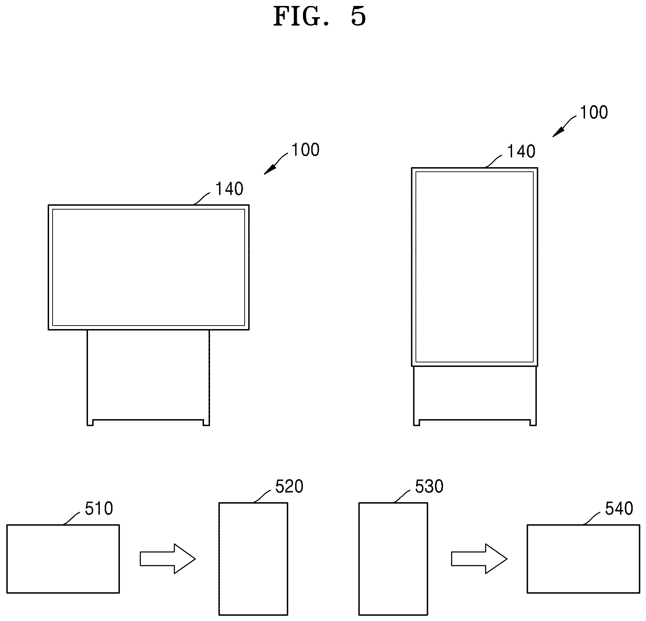

FIG. 5 is a view for describing an operation in which a display device determines a case where rotation of a display is necessary in an automatic rotation mode, according to an embodiment.

The display device 100 according to an embodiment may identify a current screen mode of a display. For example, the display device 100 may identify a screen mode according to a rotation state of the display 140. The display device 100 may detect a rotation state of the display 140 by using a gyroscope, an acceleration sensor, or the like. The display device 100 may identify whether a mode is a landscape mode in which a long edge of the display 140 is horizontally arranged or a portrait mode in which the long edge of the display 140 is vertically arranged according to the rotation state of the display 140. Alternatively, the display device 100 may identify whether the display is arranged in another direction.

The display device 100 according to an embodiment may obtain screen information of image content to be displayed on the display 140. The screen information of the image content may include a resolution of the image content, an aspect ratio of the image content, and information about whether the image content is a horizontal image or a vertical image. However, the present disclosure is not limited thereto. For example, an image in which a horizontal length of image content is greater than a vertical length may be a horizontal image, and an image in which a vertical length of image content is greater than a horizontal length may be a vertical image.

The display device 100 according to an embodiment may determine whether the current screen mode and the screen information of the image content to be displayed on the display 140 correspond to each other.

Referring to FIG. 5, when first image content 510, which is a horizontal image, is displayed in a state where a screen mode is a landscape mode, and then the first video content 510 is switched to second image content 520, the display device 100 may determine whether the landscape mode corresponds to screen information of the second image content 520. For example, when an aspect ratio of the second image content 520 is 9:16 or is a vertical image, the display device 100 may determine that the current screen mode (e.g., the landscape mode) does not correspond to the screen information of the second image content 520. Accordingly, the display device 100 may determine that rotation of the display 140 is necessary.

Alternatively, when third image content 530, which is a vertical image, is displayed in a state where a screen mode is a portrait mode, and then the third image content 530 is switched to fourth image content 540, the display device 100 may determine whether the portrait mode corresponds to screen information of the fourth image content 540. For example, when an aspect ratio of the fourth image content 540 is 21:9 or is a horizontal image, the display device 100 may determine that the current screen mode (e.g., the landscape mode) does not correspond to the screen information of the fourth image content 540. Accordingly, the display device 100 may determine that rotation of the display 140 is necessary.

However, a method shown and described with reference to FIG. 5 is only an example, and the display device according to an embodiment may identify a case where rotation of the display is necessary by using various methods.

FIG. 6 is a view for describing an operation in which a display device determines whether image content is advertisement content, according to an embodiment.

Referring to FIG. 6, the display device 100 according to an embodiment may include an image analysis module that obtains information about image content by analyzing the image content. The image analysis module may include an appropriate logic, circuit, interface, and/or code configured to operate to obtain information about image content by analyzing the image content.

The image analysis module may obtain identification information of the image content (type information of the image content), text information and image information included in the image content, and pattern information of the image by analyzing the image content.

For example, the image analysis module may recognize text included in the image content by performing optical character recognition (OCR). Also, the image analysis module may extract a feature of the image content by performing automatic content recognition (ACR), and may identify the image content by using the extracted feature.

Also, the image analysis module may obtain pattern information of the image content by performing pattern recognition. For example, the image analysis module may extract meaning or information included in the image content or extract a feature of the image content, by recognizing and analyzing a specific object, a specific pattern, a specific structure, or a specific action in the image content.

The image analysis module according to an embodiment may determine whether the image content corresponds to advertisement content, based on the obtained information about the image content.

For example, as shown in FIG. 6, when pieces of text such as "advertisement", "advertiser", and "skip advertisement" (632, 633, 634, and 635) are recognized in first image content 610 and second image content 620, the image analysis module may determine that the first image content 610 and the second image content 620 are advertisement content.

Alternatively, when feature information or pattern information of the image content extracted from the image content matches advertisement pattern information provided by a specific application, the image analysis module may determine that the image content is advertisement content. For example, as shown in FIG. 6, advertisement content provided by a first application may include pattern information such as text "visit advertiser's site" displayed at an upper right corner, a banner for navigating to the advertiser's site displayed at a lower left corner, or text "skip advertisement" displayed at a lower right corner. When pieces of pattern information 631, 632, and 633 extracted from the first image content 610 and the second image content 620 match pattern information of advertisement content provided by the first application, the display device 100 may determine that the first image content 610 and the second image content are advertisement content.

The image analysis module according to an embodiment may include one or more neural networks. The image analysis module according to an embodiment may analyze image content by using the one or more neural networks. For example, the image analysis module may input the image content to the one or more neural networks and may output information about the image content as result data.

Alternatively, the image analysis module according to an embodiment may determine whether the image content is advertisement content by using the one or more neural networks. For example, the image analysis module may input the image content information to the one or more neural networks and may output result data indicating whether the image content corresponds to advertisement content.

Alternatively, the image analysis module may input the image content to the one or more neural networks and may output result data indicating whether the image content corresponds to advertisement content. However, the present disclosure is not limited thereto.

In order for a neural network to accurately output result data corresponding to input data, the neural network should be trained. Here, 'training' may refer to training the neural network so that the neural network itself discovers or learns a method of inputting various data to the neural network and analyzing the input data, a method of classifying the input data, and/or a method of extracting a feature necessary for generating result data from the input data. In detail, through a training process, the neural network may be trained about training data (e.g., a plurality of different images) to optimize and set weight values inside the neural network. And, through the neural network having the optimized weight values, the neural network itself learns input data and outputs a desired result.

For example, through training, weight values inside one or more neural networks may be optimized so that the one or more neural networks analyze image content and output image content information. Accordingly, the one or more neural networks that have been trained may receive image content, obtain information about the image content, and output the image about the image content in various ways.

Alternatively, through training, weight values inside one or more neural networks may be optimized so that the one or more neural networks analyze image content information and output information indicating whether image content corresponds to advertisement content. Accordingly, the one or more neural networks that have been trained may receive image content information, determine whether image content corresponds to advertisement content, and output information indicating whether the image content corresponds to advertisement content in various ways.

Alternatively, through training, weight values inside one or more neural networks may be optimized so that the one or more neural networks analyze image content and output information indicating whether the image content corresponds to advertisement content. Accordingly, the one or more neural networks that have been trained may receive image content, determine whether the image content corresponds to advertisement content, and output information indicating whether the image content corresponds to advertisement content in various ways. However, the present disclosure is not limited thereto.

Embodiments described with reference to FIG. 6 are only examples, and the display device according to an embodiment may determine whether image content is advertisement content by using various methods.

The display device according to an embodiment may determine whether image content is advertisement content, through information about the image content provided by an application. For example, the information about the image content provided by the application may include information for identifying whether the image content is advertisement content. For example, when the image content is advertisement content, content information may include information indicating that the image content is advertisement content. However, the present disclosure is not limited thereto.

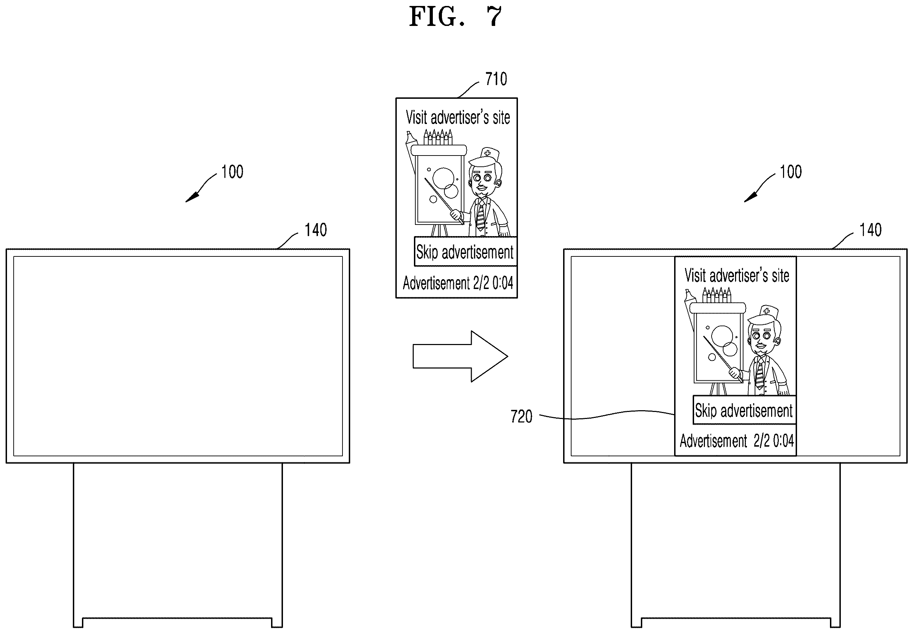

FIG. 7 is a view illustrating an operation of a display device when image content to be displayed on a display is advertisement content, according to an embodiment.

Even when it is determined that rotation of the display 140 is necessary, the display device 100 according to an embodiment may not perform rotation of the display when image content is advertisement content.

Referring to FIG. 7, a current screen mode of the display device 100 according to an embodiment may be a landscape mode. Also, image content 710 to be displayed on the display 140 may be a vertical image. In this case, the display device 100 may determine that rotation of the display 140 is necessary. Also, the display device 100 may determine that the image content 710 is advertisement content, through image analysis of the image content 710.

When the image content 710 is advertisement content, the display device 100 according to an embodiment may maintain the screen mode in the landscape mode without performing rotation of the display and.

Also, when the image content 710 corresponds to preset content (e.g., a specific type of content) other than advertisement content, the display device 100 according to an embodiment may not perform rotation of the display 140.

For example, when image content is image content having a playback time less than a first time, the display device 100 according to an embodiment may not perform a display rotation operation. The display device 100 may obtain playback time information of image content to be displayed on the display 140 and may identify whether a playback time is less than the first time.

When the playback time of the image content is less than the first time, the display device 100 according to an embodiment may maintain the screen mode in the landscape mode without performing rotation of the display 140.

Also, when a preset time has not elapsed since a most recent rotation of the display 140, the display device 100 according to an embodiment may maintain the screen mode in the landscape mode without performing rotation of the display 140.

Also, when screen rotation of an application that executes the image content is not supported or screen rotation is set not to be performed, the display device 100 according to an embodiment may maintain the screen mode in the landscape mode without performing rotation of the display 140.

The display device 100 according to an embodiment may adjust a size of the image content 710 based on a size of a display screen that is arranged in the landscape mode, and may display the image content 720 whose size is adjusted. For example, as shown in FIG. 7, a size of the image content may be adjusted to fit a size of the display screen while maintaining an aspect ratio of the image content 710, and the image content 720 whose size is adjusted may be displayed as large as possible at the center of the display 140. However, the present disclosure is not limited thereto.

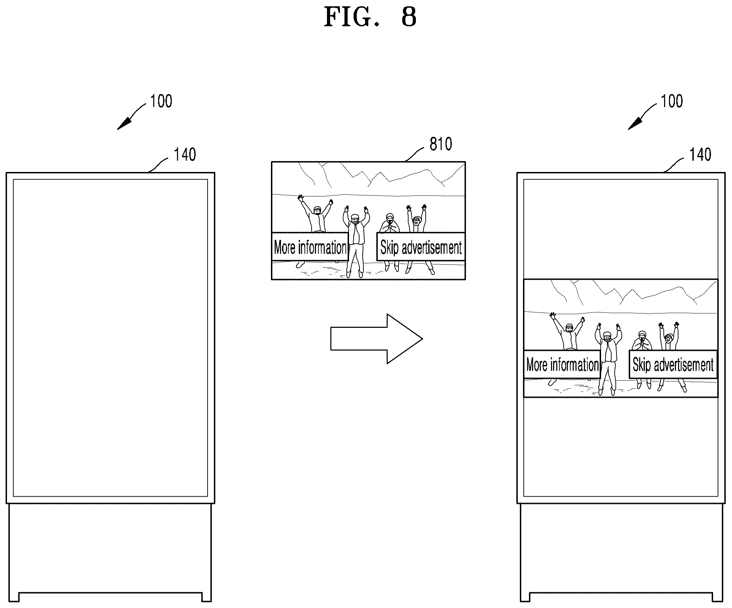

FIG. 8 is a view illustrating an operation of a display device when image content to be displayed on a display is advertisement content, according to an embodiment.

Even when it is determined that rotation of the display 140 is necessary, the display device 100 according to an embodiment may not perform rotation of the display 140 when the image content is advertisement content.

Referring to FIG. 8, a current screen mode of the display device 100 according to an embodiment may be a portrait mode. Also, image content 810 to be displayed on the display 140 may be a horizontal image. In this case, the display device 100 may determine that rotation of the display 140 is necessary. Also, the display device 100 may determine that the image content 810 is advertisement content, through image analysis of the image content 810.

When the image content 810 is advertisement content, the display device 100 according to an embodiment may maintain the screen mode in the portrait mode without performing rotation of the display 140.

Also, when a playback time of the image content 810 is less than a first time, the display device 100 according to an embodiment may maintain the screen mode in the portrait mode without performing rotation of the display 140.

Also, when a preset time has not elapsed since a most recent rotation of the display 140, the display device 100 according to an embodiment may maintain the screen mode in the portrait mode without performing rotation of the display 140.

Also, when screen rotation of an application that executes the image content is not supported or screen rotation is set not to be performed, the display device 100 according to an embodiment may maintain the screen mode in the portrait mode without performing rotation of the display 140.

The display device 100 according to an embodiment may adjust a size of the image content 810, based on a size of a display screen that is arranged in the portrait mode, and may display the image content 820 whose size is adjusted. For example, as shown in FIG. 8, a size of the image content may be adjusted to fit a size of the display screen while maintaining an aspect ratio of the image content, and the image content 820 whose size is adjusted may be displayed as large as possible at the center of the display. However, the present disclosure is not limited thereto.

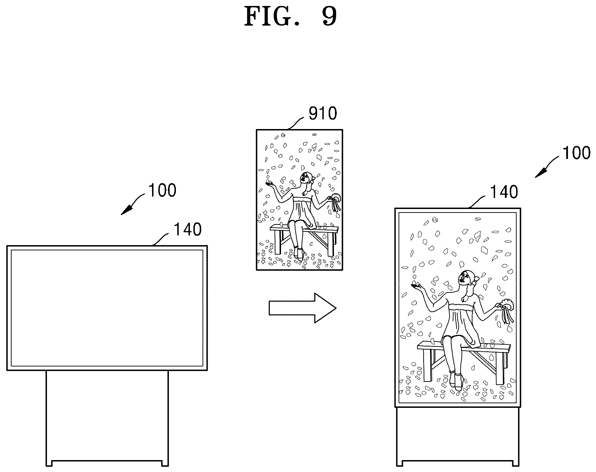

FIG. 9 is a view illustrating an operation of a display device when image content to be displayed on a display is not advertisement content, according to an embodiment.

When it is determined that rotation of the display 140 is necessary and image content is not advertisement content, the display device 100 according to an embodiment may perform rotation of the display 140.

Referring to FIG. 9, a current screen mode of the display device 100 according to an embodiment may be a landscape mode. Also, image content 910 to be displayed on the display may be a vertical image. In this case, the display device 100 may determine that rotation of the display 140 is necessary. Also, the display device 100 may determine that the image content 910 is not advertisement content, through image analysis of the image content 910.

When the image content 910 is not advertisement content, the display device 100 according to an embodiment may perform rotation of the display 140 and may switch the screen mode to a portrait mode.

For example, the display device 100 may use a rotation driving module to rotate the display 140 by 90 degrees clockwise or counterclockwise and switch the screen mode to the portrait mode.

When the display 140 is rotated, the display device 100 may display the image content 910 in a full screen. However, the present disclosure is not limited thereto.

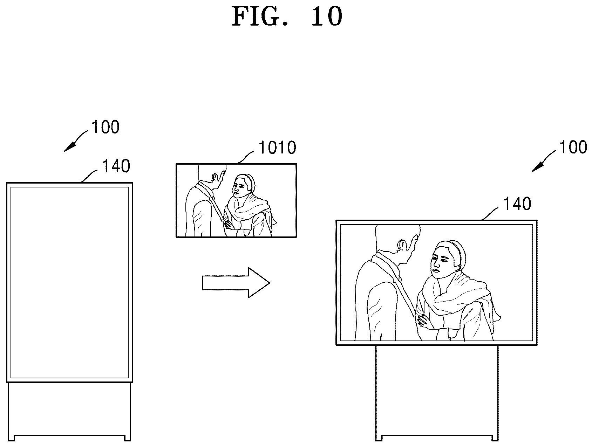

FIG. 10 is a view illustrating an operation of a display device when image content to be displayed on a display is not advertisement content, according to an embodiment.

When it is determined that rotation of the display is necessary and image content is not advertisement content, the display device 100 according to an embodiment may perform rotation of the display.

Referring to FIG. 10, a current screen mode of the display device 100 according to an embodiment may be a portrait mode. Also, image content 1010 to be displayed on the display may be a horizontal image. In this case, the display device 100 may identify that rotation of the display 140 is necessary. Also, the display device 100 may determine that the image content 1010 is not advertisement content, through image analysis of the image content 1010.

When the image content 1010 is not advertisement content, the display device 100 according to an embodiment may perform rotation of the display and switch the screen mode to a landscape mode.

For example, the display device 100 may use a rotation driving module to rotate the display 140 by 90 degrees clockwise or counterclockwise and switch the screen mode to the landscape mode.

When the display 140 is rotated, the display device 100 may display the image content 1010 in a full screen. However, the present disclosure is not limited thereto.

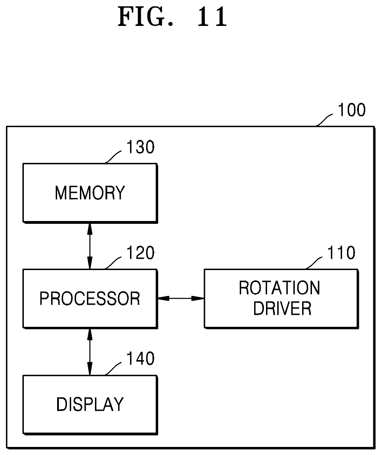

FIG. 11 is a block diagram illustrating a configuration of a first display device, according to an embodiment.

Referring to FIG. 11, the display device 100 according to an embodiment may include a rotation driving module 110, a processor 120, a memory 130, and a display 140.

The rotation driving module 110 according to an embodiment may provide power for rotating the display 140. The rotation driving module 110 may include a motor having a rotation shaft that may forwardly or backwardly rotate. The rotation driving module 110 may be included in a stand or may be coupled to the stand. Also, the rotation driving module 110 may be coupled to a rear surface of the display 140. Alternatively, the rotation driving module 110 is a wall-mounted type module capable of fixing the display 140 to a wall.

When the display 140 is mounted on the rotation shaft of the rotation driving module 110 and the rotation driving module 110 is driven to rotate the rotation shaft, the display 140 may accordingly rotate clockwise or counterclockwise.

A control signal transmitted to the rotation driving module 110 may be provide by the processor 120. When rotation of the display 140 is necessary, the processor 120 according to an embodiment may transmit a control signal for rotating the display to the rotation driving module 110. As the rotation driving module 110 is driven, the display 140 may rotate.

The processor 120 according to an embodiment controls an overall operation of the display device 100 and a signal flow between internal components of the display device 100, and performs a function of processing data.

The processor 120 may include a single-core, a dual-core, a triple-core, a quad-core, or multiples thereof. Furthermore, the processor 120 may include a plurality of processors. For example, the processor 120 may include a main processor (not shown) and a sub-processor (not shown) operating in a sleep mode.

Also, the processor 120 may include at least one of a central processing unit (CPU), a graphics processing unit (GPU), or a video processing unit (VPU). Alternatively, according to an embodiment, the processor 110 may be implemented as a system-on-chip (SoC) in which at least one of a CPU, a GPU, and a VPU is integrated. Alternatively, the processor 120 may further include a neural processing unit (NPU).

The memory 130 according to an embodiment may store various data, a program, or an application for driving and controlling the display device 100.

Also, the program stored in the memory 130 may include one or more instructions. The program (the one or more instructions) or the application stored in the memory 130 may be executed by the processor 120.

The processor 120 according to an embodiment may receive a user input that sets an automatic rotation mode, and may operate the display device 100 in the automatic rotation mode based on the received user input. Alternatively, the processor 120 may operate the display device 100 in the automatic rotation mode when a preset application is executed based on a user input.

When the display device 100 operates in the automatic rotation mode, the processor 120 according to an embodiment may determine whether rotation of the display is necessary. For example, the processor 120 may identify whether a current screen mode of the display is a landscape mode or a portrait mode. Also, the processor 120 may obtain screen information of image content to be displayed on the display. In this case, the screen information of the image content may include a resolution of the image content, an aspect ratio of the image content, and information about whether the image content is a horizontal image or a vertical image. However, the present disclosure is not limited thereto.

The processor 120 may determine whether the screen information of the image content corresponds to the current screen mode of the display, and when the screen information of the image content does not correspond to the current screen mode of the display, the processor 120 may determine that rotation of the display is necessary.

On the other hand, when the screen information of the image content corresponds to the current screen mode of the display, the processor 120 may determine that rotation of the display is not necessary.

When rotation of the display is not necessary, the processor 120 according to an embodiment may maintain the current screen mode without rotating the display. Also, the processor 120 may control the display 140 to display the image content on a display screen.

On the other hand, when rotation of the display is necessary, the processor 120 may obtain information about the image content. The information about the image content may include identification information for identifying the image content (e.g., type information of the image content), text information and image information included in the image content, feature information of the image content, and pattern information of the image content. However, the present disclosure is not limited thereto.

The processor 120 according to an embodiment may obtain the information about the image content by analyzing the image content. For example, the processor 120 may analyze the image content by performing optical character recognition (OCR), automatic content recognition (ACR), object recognition, or pattern recognition. This has been described in detail with reference to FIG. 6, and thus, a detailed description will be omitted.

The processor 120 according to an embodiment may identify whether the image content is advertisement content, based on the information about the image content. For example, when text such as "advertisement", "advertiser", or "skip advertisement" is recognized in the image content, the processor 120 may determine that the image content is advertisement content.

Alternatively, when pattern information extracted from the image content matches pattern information of advertisement content provided by a specific application, the processor 120 may determine that the image content is advertisement content. However, the present disclosure is not limited thereto.

When the image content is advertisement content, the processor 120 according to an embodiment may maintain the current screen mode without rotating the display. The processor 120 may display the image content on the display screen. For example, the processor 120 may adjust a size of the image content to fit a size of the display screen while maintaining an aspect ratio of the image content, and may control the display 140 to display the image content whose size is adjusted.

On the other hand, when the image content is not advertisement content, the processor 120 may transmit a control signal for rotating the display 140 to the rotation driving module 110. As the rotation driving module 110 is driven, the display 140 may be rotated.

For example, when the current screen mode is a landscape mode and the image content is a vertical image, the processor 120 may use the rotation driving module 110 to rotate the display 140 by 90 degrees clockwise or counterclockwise and switch to a portrait mode.

Alternatively, when the current screen mode is a portrait mode and the image content is a horizontal image, the processor 120 may use the rotation driving module 110 to rotate the display 140 by 90 degrees clockwise or counterclockwise and switch to a landscape mode. However, the present disclosure is not limited thereto.

The processor 120 may control the display 140 to display the image content on the rotated display screen. For example, the processor 120 may control the display 140 to display the image content in a full screen.

The display 140 according to an embodiment of the present disclosure generates a driving signal by converting an image signal, a data signal, an OSD signal, and a control signal processed by the processor 120. The display 140 may be implemented as a plasma display panel (PDP), a liquid crystal display (LCD), an organic light-emitting diode (OLED), or a flexible display, or may be implemented as a three-dimensional (3D) display. Also, the display 140 may include a touchscreen, and may be used as an input device in addition to an output device.

When a horizontal image is displayed on the display 140 in a landscape mode or a vertical image is displayed on the display 140 in a portrait mode under the control by the processor 120, the display 140 according to an embodiment may display the image content in a full screen. Alternatively, when a vertical image is displayed on the display 140 in a landscape mode or a horizontal image is displayed on the display 140 in a portrait model, a size of the image content may be adjusted to fit a size of the screen of the display 140, and the image content whose size is adjusted may be displayed on the display screen.

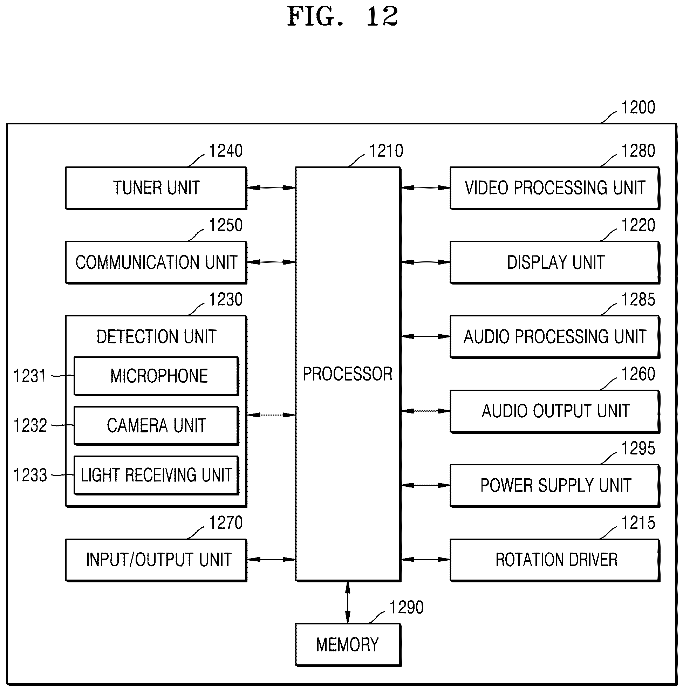

FIG. 12 is a block diagram illustrating a configuration of a display device, according to an embodiment.

Referring to FIG. 12, a display device 1500 of FIG. 12 may be an embodiment of the display device 100 described with reference to FIGS. 1 to 11.

Referring to FIG. 12, the display device 1200 according to an embodiment may include a tuner unit 1240, a processor 1210, a display unit 1220, a communication unit 1250, a detection unit 1230, an input/output unit 1270, a video processing unit 1280, an audio processing unit 1285, an audio output unit 1260, a memory 1290, and a power supply unit 1295.

A rotation driving module 1215 of FIG. 12 may correspond to the rotation driving module 110 of FIG. 11, the processor 1210 of FIG. 12 may correspond to the processor 120 of FIG. 11, the memory 1290 of FIG. 12 may correspond to the memory 130 of FIG. 11, and the display unit 1220 of FIG. 12 may correspond to the display 140 of FIG. 11. Accordingly, the same description as that made above will be omitted.

The tuner unit 1240 according to an embodiment may tune and select only a frequency of a channel to be received by the display device 1200 from among radio wave components by performing amplification, mixing, and/or resonance on a broadcast signal that is received by wire or wirelessly. The broadcast signal includes an audio, a video, and additional information (e.g., an electronic program guide (EPG)).

The tuner unit 1240 may receive a broadcast signal from any of various sources such as a terrestrial broadcasting station, a cable broadcasting station, a satellite broadcasting station, or an Internet broadcasting station. The tuner unit 1240 may receive a broadcast signal from a source such as an analog broadcasting station or a digital broadcasting station.

The communication unit 1250 may transmit and receive data or a signal to or from an external device (e.g., the external control device 200) or a server. For example, the communication unit 1250 may include a Wi-Fi module, a Bluetooth module, an infrared communication module, a wireless communication module, a LAN module, an Ethernet module, and a wired communication module. In this case, each communication module may be implemented as at least one hardware chip.

The Wi-Fi module and the Bluetooth module respectively perform communication by using a Wi-Fi method and a Bluetooth method. When the Wi-Fi module or the Bluetooth module is used, various connection information such as SSID and session key may be first transmitted and received, communication is established by using the various connection information, and then various information may be transmitted and received. The wireless communication module may include at least one communication chip that performs communication according to various wireless communication standards such as Zigbee, 3^{rd} generation (3G), 3^{rd} generation partnership project (3GPP), long term evolution (LTE), LTE advanced (LTE-A), 4^{th} generation (4G), and 5^{th} generation (5G).

The communication unit 1250 according to an embodiment may receive a control signal or a control command from an external control device. For example, the communication unit 1250 may include an IR module that may transmit and receive a signal to and from the external control device according to IR communication standards. In detail, the communication unit 1250 may receive a control signal or a control command corresponding to a user input (e.g., a key or button input of a control device) from the control device.

The detection unit 1230 according to an embodiment may detect a user's voice, image, or interaction, and may include a microphone 1231, a camera unit 1232, and a light receiving unit 1233.

The microphone 1231 receives a voice uttered by the user. The microphone 1231 may convert the received voice into an electrical signal and may output the electrical signal to the processor 1210. The user's voice may include a voice corresponding to a menu or a function of the display device 1200. For example, the microphone 1231 may receive a user voice corresponding to a rotation command of a display, may convert the received voice into an electrical signal, and may output the electrical signal to the processor 1210.

The camera unit 1232 may receive an image (e.g., consecutive frames) corresponding to a motion of the user including a gesture within a camera recognition range. The processor 1210 may select a menu displayed by the display device 1200 by using a recognition result of the received motion, or may perform control corresponding to the motion recognition result. For example, the processor 1210 may receive an image from the camera unit 1232, may recognize the user's motion corresponding to rotation of the display from the received image, and may accordingly rotate the display.

The light receiving unit 1233 receives an optical signal (including a control signal) from the external control device through an optical window (not shown) of a bezel of the display unit 1220. The light receiving unit 1233 may receive an optical signal corresponding to a user input (e.g., a touch, a press, a touch gesture, a voice, or a motion) from the control device. A control signal may be extracted from the received optical signal under the control by the processor 1210.

The input/output unit 1270 according to an embodiment may receive a video (e.g., a moving image), an audio (e.g., voice or music), and additional information (e.g., EPG) from the outside of the display device 1200. The input/output unit 1270 may include any one of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a PC port.

The processor 1210 controls an overall operation of the display device 1200 and a signal flow between components of the display device 1200, and performs a function of processing data. When there is the user's input or pre-set and stored conditions are satisfied, the processor 1210 may execute an operating system (OS) and various applications stored in the memory 1290.

The processor 1210 may include a random-access memory (RAM) for storing a signal or data input from the outside of the display device 1200 or used as a storage corresponding to various tasks performed by the display device 1200, a read-only memory (ROM) for storing a control program for controlling the display device 1200, and a processor.

The video processing unit 1280 performs processing on video data received by the display device 1200. The video processing unit 1280 may perform various image processing such as decoding, scaling, noise filtering, frame rate conversion, and resolution conversion on the video data.

The audio processing unit 1285 performs processing on audio data. The audio processing unit 1285 may perform various processing such as decoding or amplification, and noise filtering on the audio data. The audio processing unit 1285 may include a plurality of audio processing modules to process audio data corresponding to a plurality of pieces of content.

The audio output unit 1260 outputs an audio included in a broadcast signal received through the tuner unit 1240 under the control by the processor 1210. The audio output unit 1260 may output an audio (e.g., voice or sound) input through the communication unit 1250 or the input/output unit 1270. Also, the audio output unit 1260 may output an audio stored in the memory 1290 under the control by the processor 1210. The audio output unit 1260 may include at least one of a speaker, a headphone output terminal, or a Sony/Phillips digital interface (S/PDIF) output terminal.

The power supply unit 1295 supplies power input from an external power supply source to components of the display device 1200 under the control by the processor 1210. Also, the power supply unit 1295 may supply power output from one or more batteries (not shown) located inside the display device 1200 to the components under the control by the processor 1210.

The memory 1290 may store various data, a program, or an application for driving and controlling the display device 1200 under the control by the processor 1210. The memory 1290 may include modules (not shown), such as a broadcast reception module, a channel control module, a volume control module, a communication control module, a voice recognition module, a motion recognition module, a light reception module, a display control module, an audio control module, an external input control module, a power control module, a power control module of an external device that is wirelessly connected (e.g., Bluetooth), a voice database (DB), or a motion DB. The modules and DBs (not shown) of the memory 1290 may be implemented as software to perform a broadcast reception control function, a channel control function, a volume control function, a communication control function, a voice recognition function, a motion recognition function, a light reception control function, a display control function, an audio control function, an external input control function, a power supply control function, or a power control function of an external device wirelessly connected (e.g., Bluetooth) in the display device 1200. The processor 1210 may perform each function by using the software stored in the memory 1290.

The block diagrams of the display devices 100 and 1200 of FIGS. 11 and 12 are block diagrams for an embodiment. Components of the block diagram may be integrated, added, or omitted according to specifications of the display device 100 or 1200 that is actually implemented. That is, when necessary, two or more components may be combined into one component, or one component may be divided into two or more components. Also, a function performed in each block is intended to describe embodiments, and its detailed operation or device does not limit the scope of the present disclosure.

A display device according to an embodiment may include a display, a rotation driving module, a memory in which one or more instructions are stored, and at least one processor configured to execute the one or more instructions.

The at least one processor may execute the one or more instructions to cause the display device to, based on a state of the display not corresponding to attributes of image content to be displayed on the display, determine whether the image content is a specific type of content.

The at least one processor may execute the one or more instructions to cause the display device to, based on the image content not being the specific type of content, control the rotation driving module to rotate the display.

The at least one processor may execute the one or more instructions to cause the display device to control the display to display the image content on a display screen that is rotated.

The at least one processor may execute the one or more instructions to cause the display device, based on the image content being the specific type of content, not to rotate the display, and to control the display to display the image content on the display screen that is not rotated.

The state of the display may include information about a screen mode according to a rotation state of the display.

The screen mode of the display may include a landscape mode in which the display screen is horizontally elongated, and a portrait mode in which the display screen is vertically elongated.

The attributes of the image content may include screen information of the image content.

The screen information of the image content may include at least one of a resolution of the image content, an aspect ratio of the image content, and information about whether the image content is a vertical image or a horizontal image.

The specific type of content may include at least one of advertisement content output between different pieces of image content, advertisement content output during playback of the same image content, and image content having a playback time less than a preset time.

The at least one processor may execute the one or more instructions to cause the display device to obtain information about the image content.

The at least one processor may execute the one or more instructions to cause the display device to, based on the information about the image content, determine whether the image content is the specific type of content.

The information about the image content may include at least one of type information of the image content, pattern information of the image content, text information or image information included in the image content, playback time information of the image content, and information indicating whether the image content is an advertisement.

The at least one processor may cause the display device to obtain the information about the image content, by performing image analysis on a screen of the image content.

The image analysis may include at least one of optical character recognition (OCR), automatic content recognition (ACR), object recognition, and pattern recognition.

The at least one processor may execute the one or more instructions to cause the display device to, based on the image content being the specific type of content, adjust a size of the image content, based on a size of the display screen that is not rotated.

The at least one processor may execute the one or more instructions to cause the display device to control the display to display the image content whose size is adjusted.

The at least one processor may execute the one or more instructions to cause the display device to, based on a user input, operate the display in an automatic rotation mode.

The at least one processor may execute the one or more instructions to cause the display device to, based on the display operating in the automatic rotation mode, determine whether the state of the display corresponds to the attributes of the image content to be displayed on the display.

The at least one processor may execute the one or more instructions to cause the display device to execute an application for playing the image content.

The at least one processor may execute the one or more instructions to cause the display device to, based on whether screen rotation of the application is supported or on screen rotation setting information, determine whether the state of the display corresponds to the attributes of the image content to be displayed on the display.

An operation method of a display device capable of rotating a display according to an embodiment may include, based on a state of the display not corresponding to attributes of image content to be displayed on the display, determining whether the image content is a specific type of content.

The operation method of the display device capable of rotating the display according to an embodiment may include, based on the image content not being the specific type of content, rotating the display.

The operation method of the display device capable of rotating the display according to an embodiment may include displaying the image content on a display screen that is rotated.

The operation method of the display device capable of rotating the display according to an embodiment may include, based on the image content being the specific type of content, not rotating the display and displaying the image content on the display screen that is not rotated.

The state of the display may include information about a screen mode according to a rotation state of the display.

The screen mode of the display may include a landscape mode in which the display screen is horizontally elongated and a portrait mode in which the display screen is vertically elongated.

The attributes of the image content may include screen information of the image content.

The screen information of the image content may include at least one of a resolution of the image content, an aspect ratio of the image content, and information about whether the image content is a vertical image or a horizontal image.

The specific type of content may include at least one of advertisement content output between different pieces of image content, advertisement content output during playback of the same image content, and image content having a playback time less than a preset time.

The determining whether the image content to be displayed on the display is the specific type of content may include obtaining information about the image content, and based on the information about the image content, determining whether the image content is the specific type of content.

The information about the image content may include at least one of type information of the image content, pattern information of the image content, text information or image information included in the image content, playback time information of the image content, and information indicating whether the image content is an advertisement.

The obtaining of the information about the image content may include obtaining the information about the image content by performing image analysis on a screen of the image content.

The image analysis may include at least one of optical character recognition (OCR), automatic content recognition (ACR), object recognition, and pattern recognition.

The operation method of the display device may further include, based on the image content being the specific type of content, adjusting a size of the image content based on a size of the display screen that is not rotated, and displaying the image content whose size is adjusted on the display screen.

The operation method of the display device may further include, based on a user input, operating the display in an automatic rotation mode, and based on the display operating in the automatic rotation mode, determining whether the state of the display corresponds to the attributes of the image content to be displayed on the display.

The operation method of the display device may further include executing an application for playing the image content, and based on whether screen rotation of the application is supported or on screen rotation setting information, determining whether the state of the display corresponds to the attributes of the image content to be displayed on the display.

Because a display device according to an embodiment may perform automatic rotation of a display so that an arrangement direction of the display corresponds to screen information of image content without a user input, user convenience may be improved.

When the image content is advertisement content, because the display device according to an embodiment controls not to perform rotation of the display, unnecessary rotation of the display may be reduced.

Also, because unnecessary rotation of the display is reduced, the user may focus on image watching, and visual fatigue may be reduced.

An operation method of a display device according to an embodiment may be implemented as program commands executable through various computer means and may be recorded on a computer-readable medium. The computer-readable medium may include program commands, data files, data structures, and the like separately or in combinations. The program commands recorded on the computer-readable medium may be specially designed and configured for the present disclosure or may be well-known to and be usable by one of ordinary skill in the art of computer software. Examples of the computer-readable recording medium include a magnetic medium such as a hard disk, a floppy disk, or a magnetic tape, an optical medium such as a compact disc read-only memory (CD-ROM) or a digital versatile disc (DVD), a magneto-optical medium such as a floptical disk, and a hardware device specially configured to store and execute program commands such as a ROM, a random-access memory (RAM), or a flash memory. Examples of the program commands include advanced language code that may be executed by a computer by using an interpreter or the like as well as machine language code made by a compiler.

Also, the operation method of the display device according to disclosed embodiments may be provided in a computer program product. The computer program product may be a product purchasable between a seller and a purchaser.

The computer program product may include a software (S/W) program and a computer-readable storage medium in which the S/W program is stored. For example, the computer program product may include a S/W program-type product (e.g., a downloadable application) electronically distributed through a manufacturer of an electronic device or an electronic market (e.g., Google Play^{™} store or App Store). For electronic distribution, at least a portion of the S/W program may be stored in a storage medium or temporarily generated. In this case, the storage medium may be a storage medium of a server of the manufacturer, a server of the electronic market, or a relay server that temporarily stores the S/W program.

The computer program product may include a storage medium of a server or a storage medium of a client device in a system including the server and the client device. Alternatively, when there is a third device (e.g., a smartphone) communicating with the server or the client device, the computer program product may include a storage medium of the third device. Alternatively, the computer program product may include a S/W program itself transmitted from the server to the client device or the third device or from the third device to the client device.

In this case, one of the server, the client device, and the third device may perform a method according to disclosed embodiments by executing the computer program product. Alternatively, at least two of the server, the client device, and the third device may perform a method according to disclosed embodiments in a distributed fashion by executing the computer program product.

For example, the server (e.g., a cloud server or an artificial intelligence (A1) server) may execute the computer program product stored in the server, and may control the client device communicating with the server to perform a method according to disclosed embodiments.

Although embodiments have been described in detail above, the scope of the present disclosure is not limited thereto, and various modifications and improvements made by one of ordinary skill in the art by using the basic concept of the present disclosure defined by the claims are also within the scope of the present disclosure.

## Claims

1. A display device (100) comprising:
a display (140);
a rotation driving module (110) configured to rotate the display;
a memory (130) storing one or more instructions; and
at least one processor (120) configured to execute the one or more instructions,
wherein the at least one processor (120) executes the one or more instructions to cause the display device to,
based on a state of the display not corresponding to attributes of image content to be displayed on the display, determine whether the image content is a specific type of content,
based on the image content not being the specific type of content, control the rotation driving module to rotate the display, and control the display to display the image content on a display screen that is rotated, and
based on the image content being the specific type of content, not rotate the display, and control the display to display the image content on the display screen that is not rotated.

2. The display device of claim 1, wherein the state of the display comprises information about a screen mode according to a rotation state of the display,
wherein the screen mode of the display comprises a landscape mode in which the display screen is horizontally elongated and a portrait mode in which the display screen is vertically elongated.

3. The display device of claim 1 or 2, wherein the attributes of the image content comprise screen information of the image content,
wherein the screen information of the image content comprises at least one of a resolution of the image content, an aspect ratio of the image content, and information about whether the image content is a vertical image or a horizontal image.

4. The display device of any one of claims 1 to 3, wherein the specific type of content comprises at least one of advertisement content output between different pieces of image content, advertisement content output during playback of same image content, and image content having a playback time less than a preset time.

5. The display device of any one of claims 1 to 4, wherein the at least one processor (120) executes the one or more instructions to cause the display device to
obtain information about the image content, and
based on the information about the image content, determine whether the image content is the specific type of content,
wherein the information about the image content comprises at least one of type information of the image content, pattern information of the image content, text information or image information included in the image content, playback time information of the image content, and information indicating whether the image content is an advertisement.

6. The display device of claim 5, wherein the at least one processor (120) executes the one or more instructions to cause the display device to obtain the information about the image content, by performing image analysis on a screen of the image content,
wherein the image analysis comprises at least one of optical character recognition (OCR), automatic content recognition (ACR), object recognition, and pattern recognition.

7. The display device of any one of claims 1 to 6, wherein the at least one processor (120) executes the one or more instructions to cause the display device to,
based on the image content being the specific type of content, adjust a size of the image content, based on a size of the display screen that is not rotated, and
control the display to display the image content whose size is adjusted.

8. The display device of any one of claims 1 to 7, wherein the at least one processor (120) executes the one or more instructions to cause the display device to,
based on a user input, operate the display in an auto rotation mode, and based on the display operating in the auto rotation mode, determine whether the state of the display corresponds to the attributes of the image content to be displayed on the display.

9. The display device of any one of claims 1 to 8, wherein the at least one processor (120) executes the one or more instructions to cause the display device to
execute an application for playing the image content, and
based on whether screen rotation of the application is supported or on screen rotation setting information, determine whether the state of the display corresponds to the attributes of the image content to be displayed on the display.

10. An operation method of a display device capable of rotating a display, the operation method of the display device comprising:
based on a state of the display not corresponding to attributes of image content to be displayed on the display, determining whether the image content is a specific type of content (S240);
based on the image content not being the specific type of content, rotating the display (S250);
displaying the image content on a display screen that is rotated (S260); and
based on the image content being the specific type of content, not rotating the display, and displaying the image content on the display screen that is not rotated (S230).

11. The operation method of the display device of claim 10, wherein the state of the display comprises information about a screen mode according to a rotation state of the display,
wherein the screen mode of the display comprises a landscape mode in which the display screen is horizontally elongated and a portrait mode in which the display screen is vertically elongated.

12. The operation method of the display device of claim 10 or 11, wherein the attributes of the image content comprise screen information of the image content,
wherein the screen information of the image content comprises at least one of a resolution of the image content, an aspect ratio of the image content, and information about whether the image content is a vertical image or a horizontal image.

13. The operation method of the display device of any one of claims 10 to 12, wherein the specific type of content comprises at least one of advertisement content output between different pieces of image content, advertisement content output during playback of same image content, and image content having a playback time less than a preset time.

14. The operation method of the display device of any one of claims 10 to 13, wherein the determining whether the image content to be displayed on the display is the specific type of content comprises:
obtaining information about the image content; and
based on the information about the image content, determining whether the image content is the specific type of content,
wherein the information about the image content comprises at least one of type information of the image content, pattern information of the image content, text information or image information included in the image content, playback time information of the image content, and information indicating whether the image content is an advertisement.

15. A computer-readable recording medium storing a program for performing the operation method of any one of claims 10 to 14.
